# EUROPÄISCHE PATENTSCHRIFT

(11) **EP 3 047 610 B1**
(45) Veröffentlichungstag und Bekanntmachung des Hinweises auf die Patenterteilung: **18.07.2018**
(21) Anmeldenummer: 14801957.3
(22) Anmeldetag: 07.11.2014
(51) Int. Cl.: H04L 12/26, H04L 29/06

(54) **VERFAHREN ZUM ERFASSEN VON IN EINEM RECHNER-NETZWERK MIT MINDESTENS EINEM RECHNER AUSGESENDETEN DATEN UND DATEN-ERFASSUNGSANORDNUNG**
METHOD FOR ACQUIRING DATA TRANSMITTED IN A COMPUTER NETWORK COMPRISING AT LEAST ONE COMPUTER, AND DATA ACQUISITION ARRANGEMENT
PROCÉDÉ D'ACQUISITION DE DONNÉES ENVOYÉES DANS UN RÉSEAU DE CALCULATEURS COMPRENANT AU MOINS UN CALCULATEUR ET SYSTÈME D'ACQUISITION DE DONNÉES

(30) Priorität: 19.11.2013 DE 102013223548
(43) Veröffentlichungstag der Anmeldung: 27.07.2016
(73) Patentinhaber: Siemens Aktiengesellschaft, 80333 München (DE)
(72) Erfinder: SCHULZ, Oliver, 31234 Edemissen (DE); SEIFERT, Matthias, 38114 Braunschweig (DE); ZIEGLER, Peter, 38122 Braunschweig (DE)
(86) Internationale Anmeldenummer: PCT/EP2014/074023
(87) Internationale Veröffentlichungsnummer: WO 2015/074896

(56) Entgegenhaltungen:
- EP-A2- 1 130 850
- EP-A2- 1 511 220
- GB-A- 2 424 540
- US-A1- 2009 138 427
- US-B2- 6 898 632
- Hans-Hermann Bock: "Fachtagung Safety in Transportation Leitfaden für die IT Sicherheit auf Grundlage IEC 62443", , 6. November 2013 (2013-11-06), XP055168955, Gefunden im Internet: URL:http://rzv113.rz.tu-bs.de/SiT_Safetyin Transportation/SiT_freigabe_13/SiT_Bock.pd f [gefunden am 2015-02-11]
- Dipl.-Ing Klaus Kemp ET AL: "Forschungsvorhaben 56/03 Qualifizierung von Bussystemen und deren Komponenten in der Anlagensicherheit der Chemie-Industrie von", , 31. Dezember 2004 (2004-12-31), XP055169534, Gefunden im Internet: URL:http://www2.lanuv.nrw.de/anlagen/bussy steme.pdf [gefunden am 2015-02-13]
- Anonymous: "Network tap - Wikipedia, the free encyclopedia", , 9. November 2013 (2013-11-09), Seiten 1-5, XP055168923, Gefunden im Internet: URL:http://en.wikipedia.org/w/index.php?ti tle=Network_tap&oldid=580838157 [gefunden am 2015-02-11]
- Anonymous: "Pull-Model - Wikipedia", , 8 December 2009 (2009-12-08), XP055383094, Retrieved from the Internet: URL:https://de.wikipedia.org/w/index.php?t itle=Pull-Model&oldid=67737269 [retrieved on 2017-06-20]

## Beschreibung

Zur Diagnose und zum Nachweis der korrekten Funktion eines Rechner-Netzwerks mit Sicherheitsanforderungen besteht die Aufgabe, in dem Netzwerk übertragene Daten möglichst vollständig und rückwirkungsfrei zu erfassen. Die Rückwirkungsfreiheit muss dabei gemäß den sicherungstechnischen Regeln nachgewiesen werden können. Aus praktischen Gründen muss aber auch ein möglichst einfacher Fernzugriff auf die erfassten Daten zu Diagnose- und Prüfzwecken möglich sein.

Aus den Dokumenten US 6898632 B2, EP 1511220 A2, GB 2424540 A und US 2009/138427 A1 ist ein Verfahren zum Erfassen von in einem Rechner-Netzwerk mit mindestens einem Rechner ausgesendeten Daten, bei dem die ausgesendeten Daten zu einem Zusatzrechner übertragen werden, wobei die ausgesendeten Daten rückwirkungsfrei abgegriffen und zu einer Daten-Erfassungseinrichtung geleitet werden, bekannt.

Um die Netzwerklast zu reduzieren bzw. zu optimieren, wird das obige Verfahren derart weitergebildet, dass die von dem mindestens einen Rechner ausgesendeten Daten solche sind, die von ihm zuvor empfangen oder versendet worden sind, und die erneut datentechnisch verpackt und danach zu dem Zusatzrechner übertragen werden.

Als besonders vorteilhaft wird es im Hinblick auf Sicherheitsaspekte angesehen, wenn die Daten über eine Anschlussleitung zu dem Zusatzrechner übertragen werden, wobei die über die Anschlussleitung zu dem Zusatzrechner übertragenen Daten in einer Daten-Erfassungseinrichtung aufgenommen werden, die über einen hardwarebasierten Abgriff rückwirkungsfrei mit der Anschlussleitung verbunden ist.

In vorteilhafter Weise zuverlässig rückwirkungsfrei lässt sich das erfindungsgemäße Verfahren durchführen, wenn zur rückwirkungsfreien Verbindung ein rückwirkungsfreier, hardwarebasierter Abgriff verwendet wird. Entsprechendes gilt, wenn zur rückwirkungsfreien Verbindung eine Nur-Lese-Leitung verwendet wird.

Besonders zuverlässig rückwirkungsfrei ist die Verbindung dann, wenn sowohl ein rückwirkungsfreier Abgriff als auch eine Nur-Lese-Leitung eingesetzt wird.

In vorteilhafter Weise ist durch den Anschluss der Daten-Erfassungseinrichtung über einen rückwirkungsfreien Abgriff und/oder eine Nur-Lese-Leitung sichergestellt, dass von der Daten-Erfassungseinrichtung nicht auf das Rechner-Netzwerk eingewirkt werden kann. Außerdem bietet das erfindungsgemäße Verfahren wegen seiner Rückwirkungsfreiheit die vorteilhafte Möglichkeit, von einem übergeordneten Überwachungssystem elektronisch auf die erfassten Daten in der Daten-Erfassungseinrichtung zuzugreifen.

Bei einer weiteren vorteilhaften Ausgestaltung des erfindungsgemäßen Verfahrens wird der mindestens eine Rechner im sicherungstechnischen Rechnernetzwerk von dem Zusatzrechner zum Aussenden der Daten veranlasst. Der Zusatzrechner wird hier also zur Abfrage des bzw. der Rechner des Rechner-Netzwerks benutzt.

Das erfindungsgemäße Verfahren kann in verschiedenen Varianten ausgeführt werden. Als besonders vorteilhaft wird es angesehen, wenn als Rechner-Netzwerk ein Switched-Ethernet-Netzwerk mit als Telegramme ausgesendeten Daten und als Daten-Erfassungsanordnung eine Telegramme-Erfassungsanordnung und als Daten-Erfassungseinrichtung eine Telegramme-Erfassungseinrichtung verwendet wird sowie als hardwarebasierter Abgriff ein Ethernet-TAP eingesetzt wird.

Ferner wird es als vorteilhaft erachtet, wenn der Rechner von dem Zusatzrechner derart aktiviert wird, dass er Zustandsdaten- und/oder Diagnosedaten-Telegramme aussendet. Dabei wiederum wird es als besonders vorteilhaft angesehen, wenn bei mehreren Rechnern die Zustandsdaten- und/oder Diagnosedaten-Telegramme zyklisch ausgesendet werden. Dies geschieht z.B. aufgrund einer zyklischen Abfrage seitens des Zusatzrechners oder durch ein geeignetes Kommando, das der Zusatzrechner an mindestens einen der Rechner sendet.

Mit Vorteilen ist es ferner verbunden, wenn eine Abfrage der Zustandsdaten- und/oder der Diagnosedaten-Telegramme der Rechner von dem Zusatzrechner weiter geleitet wird zu einem Empfängerport des jeweiligen Rechners.

Als besonders vorteilhaft wird es ferner angesehen, wenn das erfindungsgemäße Verfahren bei einem bahntechnischen Sicherungssystem durchgeführt wird, weil in solchen Systemen zunehmend Switched-Ethernet-Netzwerke eingesetzt werden. In einem solchen bahntechnischen Sicherungssystem ist es zwingend notwendig, dass das Erfassen von Daten bzw. Telegrammen der Rechner rückwirkungsfrei erfolgt und nur solche Rechner, dazu zählt auch der Zusatzrechner, im Stellwerkssystem eingesetzt werden, die nach den Regeln für diese Anwendungsart ertüchtigt worden sind.

Zur weiteren Erläuterung der Erfindung ist in
- Figur 1: schematisch ein Switched Ethernet-Netzwerk mit einem Ausführungsbeispiel der erfindungsgemäßen Telegramme-Erfassungsanordnung und in
- Figur 2: eine detailliertere Darstellung des Netzwerks und des Ausführungsbeispiels der erfindungsgemäßen Telegramme-Erfassungsanordnung nach Figur 1 wiedergegeben.

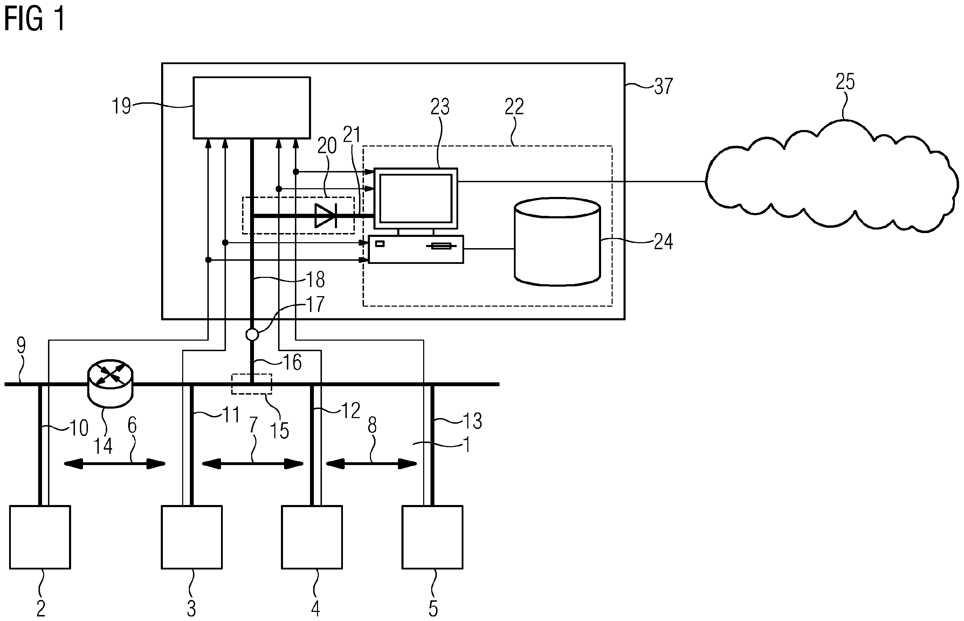

Die Figur 1 zeigt ein als Switched Ethernet-Netzwerk 1 ausgebildetes Rechner-Netzwerk, vorzugsweise ein bei einem bahntechnischen Sicherungssystem eingesetztes Switched Ethernet-Netzwerk, das Rechner 2, 3, 4 und 5 in Form von sicherheitsrelevanten Komponenten des bahntechnischen Sicherungssystems enthält. Zwischen den Rechnern 2 bis 5 sind jeweils bidirektionale Kommunikationsverbindungen vorgesehen, die über eine zentrale Datenleitung 9 und über der besseren Übersicht halber nicht dargestellte Netzwerk-Switches geführt sind; die Netzwerk-Switches sind an jeden der Rechner 2 bis 5 über Anschlussverbindungen 10 bis 13 angeschlossen.

In der Datenleitung 9 ist ein nur schematisch angedeuteter Netzwerk-Switch 15 angeordnet. An einen Kommunikationsport 16 des Netzwerk-Switches 15 ist eine Anschlussleitung 18 angeschlossen, die zu einem Zusatzrechner 19 führt, der in hier nicht dargestellter Weise auch mit einer Ethernet-Netzschnittstelle versehen ist.

Im Zuge der Anschlussleitung 18 liegt ein Ethernet-TAP 20, bei dem es sich bekanntlich um eine Schaltungsanordnung handelt, über die ein rückwirkungsfreier Zugang zu dem Datenfluss auf der Anschlussleitung 18 ermöglicht ist. Der Ethernet-TAP 20 ist mit einer Nur-Lese-Leitung 21 mit einer Telegramme-Erfassungseinrichtung 22 für die Telegramme der Rechner 2 bis 5 verbunden. Die Telegramme-Erfassungseinrichtung 22 weist im dargestellten Ausführungsbeispiel außer einem Monitorrechner 23 eine Speichereinrichtung 24 für die Telegramme auf, die dem Monitorrechner 23 nachgeordnet ist.

An die Telegramme-Erfassungseinrichtung 22 kann von einem nicht gezeigten, übergeordneten Überwachungssystem über das Internet 25 auf die von der Telegramme-Erfassungseinrichtung 22 erfassten Telegramme zurückgegriffen werden, ohne dass dadurch eine Rückwirkung auf das Switched Ethernet-Netzwerk 1 eintritt. Dies beruht darauf, dass der Ethernet-TAP 20 rückwirkungsfrei den Telegrammverkehr abhören kann und/oder die Telegramme-Erfassungseinrichtung 22 lediglich über eine Nur-Lese-Leitung 21 mit dem Ethernet TAP verbunden ist.

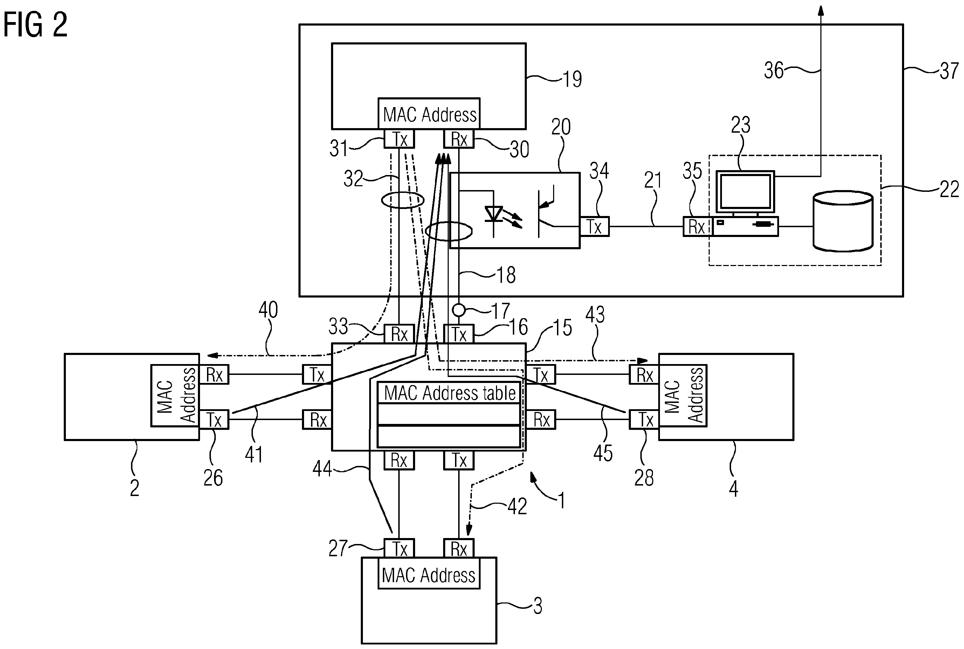

Die Figur 2, in der mit der Fig. 1 übereinstimmende Elemente mit denselben Bezugszeichen versehen sind, zeigt das Switched Ethernet-Netzwerk 1 mit den Rechnern 2, 3, und 4, die jeweils mit einer MAC-Adresse versehen sind und jeweils bidirektional unter anderem mit dem Netzwerk-Switch 15 verbunden sind. Dabei ist jeder der Rechner 2 bis 4 so ausgebildet, dass er Telegramme, die von ihm empfangen oder gesendet werden erneut datentechnisch verpackt und zu dem Zusatzrechner 19 als ausgesendete Daten sendet. In jedem der Rechner 2 bis 4 bzw. 5 findet also eine "virtuelle Spiegelung" der jeweils von den anderen Rechnern empfangenen und /oder zu diesen anderen Rechnern gesendeten Telegramme statt. Die Rechner 2 bis 4 sind jeweils mit einem Kommunikationsport 26, 27 und 28 versehen. Der Ethernet-Switch 15 ist über seinen Kommunikationsport 16 mit der Anschlussleitung 18 verbunden. Die Anschlussleitung 18 führt zu einem Empfängerport 30 des Zusatzrechners 19. An die Anschlussleitung 18 ist der Ethernet-TAP 20 angeschlossen.

Wie die Figur 2 ferner zeigt, ist der Ethernet-TAP 20 so aufgebaut, dass in dieser Ausführung nur ein Abgreifen der Telegramme möglich ist. Der rückwirkungsfreie Ethernet TAP ist zusätzlich über die Nur-Lese-Leitung 21 mit einem Empfängerport 35 der Telegramme-Erfassungseinrichtung 22 verbunden. Von dieser Telegramme-Erfassungseinrichtung 22 kann über eine Kommunikationsstrecke 36 eine Verbindung zu einem übergeordneten Überwachungssystem hergestellt werden. Der Zusatzrechner 19 mit der Anschlussleitung 18 und dem Ethernet-TAP 20 mit der Nur-Lese-Leitung 21 und der Telegramme-Erfassungseinrichtung 22 bilden eine Telegramme-Erfassungsanordnung 37.

Das erfindungsgemäße Verfahren läuft in folgender Weise ab: Sendet beispielsweise Rechner 2 ein Telegramm an Rechner 4, so wird durch eine entsprechende Einrichtung sichergestellt, dass dieses Telegramm zusätzlich an den Zusatzrechner 19 übertragen wird. Da diese Übertragung über die Anschlussleitung 18 erfolgen muss, wird das im Netzwerk gesendete Telegramm vom rückwirkungsfreien Ethernet TAP 20 erfasst und über die Nur-Lese-Leitung 21 an die Daten-Erfassungseinrichtung 22 weitergegeben. Damit wird jedes von einem Rechner im Netzwerk gesendete Telegramm von der Daten-Erfassungseinrichtung rückwirkungsfrei aufgezeichnet. Zusätzlich kann auch jedes von einem Rechner (beispielsweise Rechner 4) empfangene Telegramm durch eine entsprechende Einrichtung zusätzlich an den Zusatzrechner 19 übertragen werden und wird somit ebenfalls von der Daten-Erfassungsanordnung 37 aufgezeichnet.

In einer weiteren Variante wird von dem Zusatzrechner 19 über die Kommunikationsverbindung 18 und den Netzwerk-Switch 15 beispielsweise der Rechner 2 über eine strickpunktiert dargestellte Verbindungsstrecke 40 zur Aussendung beispielsweise eines Diagnoseinformations-Telegramms aktiviert bzw. aufgefordert. Darauf wird ein solches Telegramm über einen strichliert dargestellten Signalweg 41 von dem Kommunikationsport 26 dieses Rechners über den Netzwerk-Switch 15 zu dem Zusatzrechner 19 übertragen. Diese Übertragung erfolgt über die Anschlussleitung 18, so dass der Ethernet-TAP 20 dieses Telegramm erfassen und über die Nur-Lese-Leitung 21 an die Monitor-Einheit 23 leiten kann. Letztere kann dabei in keiner Weise auf das Switched Ethernet-Netzwerk 1 rückwirken, weil sich zwischen der Telegramme-Erfassungseinrichtung 22 die Nur-Lese-Leitung 21 und der rückwirkungsfreie Ethernet-TAP 20 befindet.

In entsprechender Weise lassen sich über weitere Verbindungsstrecken 42 bzw. 43 die Rechner 3 und 4 zur Abgabe von beispielsweise Zustandsinformationen-Telegrammen anregen, die dann über die Anschlussleitung 18 zu dem Zusatzrechner 19 übertragen werden. Auch hierbei erfolgt rückwirkungsfrei ein Erfassen dieser Telegramme über das Ethernet-TAP 20 und die Telegramme-Erfassungseinrichtung 22.

mit einer MAC-Adresse versehen sind und jeweils bidirektional unter anderem mit dem Netzwerk-Switch 15 verbunden sind. Dabei ist jeder der Rechner 2 bis 4 so ausgebildet, dass er Telegramme, die von ihm empfangen oder gesendet werden erneut datentechnisch verpackt und zu dem Zusatzrechner 19 als ausgesendete Daten sendet. In jedem der Rechner 2 bis 4 bzw. 5 findet also eine "virtuelle Spiegelung" der jeweils von den anderen Rechnern empfangenen und /oder zu diesen anderen Rechnern gesendeten Telegramme statt. Die Rechner 2 bis 4 sind jeweils mit einem Kommunikationsport 26, 27 und 28 versehen. Der Ethernet-Switch 15 ist über seinen Kommunikationsport 16 mit der Anschlussleitung 18 verbunden. Die Anschlussleitung 18 führt zu einem Empfängerport 30 des Zusatzrechners 19. An die Anschlussleitung 18 ist der Ethernet-TAP 20 angeschlossen.

Wie die Figur 2 ferner zeigt, ist der Ethernet-TAP 20 so aufgebaut, dass in dieser Ausführung nur ein Abgreifen der Telegramme möglich ist. Der rückwirkungsfreie Ethernet TAP ist zusätzlich über die Nur-Lese-Leitung 21 mit einem Empfängerport 35 der Telegramme-Erfassungseinrichtung 22 verbunden. Von dieser Telegramme-Erfassungseinrichtung 22 kann über eine Kommunikationsstrecke 36 eine Verbindung zu einem übergeordneten Überwachungssystem hergestellt werden. Der Zusatzrechner 19 mit der Anschlussleitung 18 und dem Ethernet-TAP 20 mit der Nur-Lese-Leitung 21 und der Telegramme-Erfassungseinrichtung 22 bilden eine Telegramme-Erfassungsanordnung 37.

Das erfindungsgemäße Verfahren läuft in folgender Weise ab: Sendet beispielsweise Rechner 2 ein Telegramm an Rechner 4, so wird durch eine entsprechende Einrichtung sichergestellt, dass dieses Telegramm zusätzlich an den Zusatzrechner 19 übertragen wird. Da diese Übertragung über die Anschlussleitung 18 erfolgen muss, wird das im Netzwerk gesendete Telegramm vom rückwirkungsfreien Ethernet TAP 20 erfasst und über die Nur-Lese-Leitung 21 an die Daten-Erfassungseinrichtung 22 weitergegeben. Damit wird jedes von einem Rechner im Netzwerk gesendete Telegramm von der Daten-Erfassungseinrichtung rückwirkungsfrei aufgezeichnet. Zusätzlich kann auch jedes von einem Rechner (beispielsweise Rechner 4) empfangene Telegramm durch eine entsprechende Einrichtung zusätzlich an den Zusatzrechner 19 übertragen werden und wird somit ebenfalls von der Daten-Erfassungsanordnung 37 aufgezeichnet.

In einer weiteren Variante wird von dem Zusatzrechner 19 über die Kommunikationsverbindung 18 und den Netzwerk-Switch 15 beispielsweise der Rechner 2 über eine strickpunktiert dargestellte Verbindungsstrecke 40 zur Aussendung beispielsweise eines Diagnoseinformations-Telegramms aktiviert bzw. aufgefordert. Darauf wird ein solches Telegramm über einen strichliert dargestellten Signalweg 41 von dem Kommunikationsport 26 dieses Rechners über den Netzwerk-Switch 15 zu dem Zusatzrechner 19 übertragen. Diese Übertragung erfolgt über die Anschlussleitung 18, so dass der Ethernet-TAP 20 dieses Telegramm erfassen und über die Nur-Lese-Leitung 21 an die Monitor-Einheit 23 leiten kann. Letztere kann dabei in keiner Weise auf das Switched Ethernet-Netzwerk 1 rückwirken, weil sich zwischen der Telegramme-Erfassungseinrichtung 22 die Nur-Lese-Leitung 21 und der rückwirkungsfreie Ethernet-TAP 20 befindet.

In entsprechender Weise lassen sich über weitere Verbindungsstrecken 42 bzw. 43 die Rechner 3 und 4 zur Abgabe von beispielsweise Zustandsinformationen-Telegrammen anregen, die dann über die Anschlussleitung 18 zu dem Zusatzrechner 19 übertragen werden. Auch hierbei erfolgt rückwirkungsfrei ein Erfassen dieser Telegramme über das Ethernet-TAP 20 und die Telegramme-Erfassungseinrichtung 22.

## Patentansprüche

1. Verfahren zum Erfassen von in einem Rechner-Netzwerk (1) mit mindestens einem Rechner (2,3,4,5) ausgesendeten Daten, bei dem die ausgesendeten Daten zu einem Zusatzrechner (19) übertragen werden, wobei die ausgesendeten Daten rückwirkungsfrei abgegriffen und zu einer Daten-Erfassungseinrichtung (22) geleitet werden
**dadurch gekennzeichnet, dass** die von dem mindestens einen Rechner (2,3,4,5) ausgesendeten Daten solche sind, die von ihm zuvor empfangen oder versendet worden sind, und die erneut datentechnisch verpackt und danach zu dem Zusatzrechner (19) übertragen werden.

2. Verfahren nach Anspruch 1,
**dadurch gekennzeichnet, dass** die Daten über eine Anschlussleitung (18) zu dem Zusatzrechner (19) übertragen werden, wobei die über die Anschlussleitung (18) zu dem Zusatzrechner (19) übertragenen Daten in der Daten-Erfassungseinrichtung (22) aufgenommen werden, die über einen hardwarebasierten Abgriff (20) rückwirkungsfrei mit der Anschlussleitung (18) verbunden ist.

3. Verfahren nach Anspruch 2,
**dadurch gekennzeichnet, dass** zur rückwirkungsfreien Verbindung ein rückwirkungsfreier, hardwarebasierter Abgriff verwendet wird.

4. Verfahren nach Anspruch 2 oder 3,
**dadurch gekennzeichnet, dass** zur rückwirkungsfreien Verbindung eine Nur-Lese-Leitung (21) verwendet wird.

5. Verfahren nach Anspruch 1,
**dadurch gekennzeichnet, dass** der mindestens eine Rechner von dem Zusatzrechner derart aktiviert wird, dass er Zustands- und/oder Diagnose-Daten aussendet.

6. Verfahren nach einem der Ansprüche 2 bis 4,
**dadurch gekennzeichnet, dass** als Rechner-Netzwerk ein Switched-Ethernet-Netzwerk (1) mit als Telegramme ausgesendeten Daten verwendet wird, als Daten-Erfassungsanordnung eine Telegramme-Erfassungsanordnung (37) und als Daten-Erfassungseinrichtung eine Telegramme-Erfassungseinrichtung (22) verwendet wird und als hardwarebasierter Datenabgriff ein rückwirkungsfreies Ethernet-TAP (20) eingesetzt wird.

7. Verfahren nach Anspruch 6,
**dadurch gekennzeichnet, dass** der mindestens eine Rechner von dem Zusatzrechner derart aktiviert wird, dass er Zustands- und/oder Diagnosedaten-Telegramme aussendet.

8. Verfahren nach Anspruch 7,
**dadurch gekennzeichnet, dass** bei mehreren Rechnern im Rechner-Netzwerk die Zustandsdaten- und/oder Diagnoseinformationen-Telegramme zyklisch ausgesendet werden.

9. Verfahren nach Anspruch 7 oder 8,
**dadurch gekennzeichnet, dass** eine Abfrage der Zustandsdaten- und/oder Diagnosedaten-Telegramme der Rechner von dem Zusatzrechner weitergeleitet wird zu einem Empfängerport des jeweiligen Rechners.

10. Verfahren nach einem der vorangehenden Ansprüche,
**dadurch gekennzeichnet, dass** das Verfahren bei einem bahntechnischen Sicherungssystem durchgeführt wird.

## Claims

1. Method for acquiring data transmitted in a computer network (1) comprising at least one computer (2,3,4,5), wherein the transmitted data is transferred to an auxiliary computer (19), wherein the transmitted data is reactionlessly tapped and passed to a data acquisition device (22),
**characterised in that**
the data transmitted from the at least one computer (2,3,4,5) is that which had previously been received or sent by it, and which is repackaged and subsequently transferred to the auxiliary computer (19).

2. Method according to claim 1,
**characterised in that**
the data is transferred to the auxiliary computer (19) via a connecting cable (18), wherein the data transferred to the auxiliary computer (19) via the connecting cable (18) is stored in the data acquisition device (22) which is reactionlessly connected to the connecting cable (18) via a hardware-based tap (20).

3. Method according to claim 2,
**characterised in that**
a reactionless, hardware-based tap is used for the reactionless connection.

4. Method according to claim 2 or 3,
**characterised in that**
a read-only cable (21) is used for the reactionless connection.

5. Method according to claim 1,
**characterised in that**
the at least one computer is activated by the auxiliary computer such that it transmit status data and/or diagnostic data.

6. Method according to one of claims 2 to 4,
**characterised in that**
a switched Ethernet network (1) having data transmitted as telegrams is used as the computer network, a telegram acquisition arrangement (37) is used as the data acquisition arrangement and a telegram acquisition device (22) is used as the data acquisition device, and a reactionless Ethernet TAP (20) is employed as the hardware-based data tap.

7. Method according to claim 6,
**characterised in that**
the at least one computer is activated by the auxiliary computer such that it transmits status and/or diagnostic data telegrams.

8. Method according to claim 7,
**characterised in that**
if there are a plurality of computers in the computer network, the status data and/or diagnostic information telegrams are transmitted cyclically.

9. Method according to claim 7 or 8,
**characterised in that**
an interrogation of status data and/or diagnostic data telegrams of the computers by the auxiliary computer is forwarded to a receiver port of the respective computer.

10. Method according to one of the preceding claims,
**characterised in that**
the method is carried out in a rail signaling and safety system.

## Revendications

1. Procédé d'acquisition de données envoyées dans un réseau de calculateurs (1) comprenant au moins un calculateur (2, 3, 4, 5), dans lequel les données envoyées sont transmises à un calculateur auxiliaire (19), et selon lequel les données envoyées sont prélevées sans rétroaction et sont amenées à un équipement d'acquisition de données (22),
**caractérisé en ce que**
les données envoyées par le au moins un calculateur (2, 3, 4, 5) sont celles qui ont été reçues ou envoyées par celui-ci précédemment et qui sont conditionnées à nouveau par une technique de données et transmises ensuite au calculateur auxiliaire (19).

2. Procédé selon la revendication 1
**caractérisé en ce que** les données sont transmises par l'intermédiaire d'un câble de connexion (18) au calculateur auxiliaire (19), les données transmises par l'intermédiaire du câble de connexion (18) au calculateur auxiliaire (19) étant enregistrées dans l'équipement d'acquisition de données (22) qui est connecté sans rétroaction via un dispositif de connexion informatique (20) au câble de connexion (18).

3. Procédé selon la revendication 2,
**caractérisé en ce qu'**un dispositif de connexion informatique ne comportant pas de rétroaction est utilisé pour constituer la jonction sans rétroaction.

4. Procédé selon la revendication 2 ou 3,
**caractérisé en ce qu'**une liaison à lecture seule (21) est utilisée pour constituer la jonction sans rétroaction.

5. Procédé selon la revendication 1,
**caractérisé en ce que** le au moins un calculateur est activé par le calculateur auxiliaire de telle sorte qu'il envoie des données d'état et/ou de diagnostic.

6. Procédé selon l'une des revendications 2 à 4,
**caractérisé en ce que** le réseau de calculateurs utilisé est un réseau Ethernet commuté (1) comportant des données envoyées sous forme de télégrammes, et en tant que dispositif d'acquisition de données, on utilise un dispositif d'acquisition de télégrammes (37), en tant qu'équipement d'acquisition de données, on utilise un équipement d'acquisition de télégrammes (22) et en tant que dispositif de connexion informatique de données, on utilise un dispositif de connexion TAP Ethernet (20) sans rétroaction.

7. Procédé selon la revendication 6,
**caractérisé en ce que** le au moins un calculateur est activé par le calculateur auxiliaire de telle sorte qu'il envoie des télégrammes de données d'état et/ou de diagnostic.

8. Procédé selon la revendication 7,
**caractérisé en ce que**, lorsqu'il y a plusieurs calculateurs dans le réseau de calculateurs, les télégrammes de données d'état et/ou d'informations de diagnostic sont envoyés de manière cyclique.

9. Procédé selon la revendication 7 ou 8,
**caractérisé en ce qu'**une interrogation des télégrammes de données d'état et/ou de données de diagnostic des calculateurs est retransmise par le calculateur auxiliaire vers un port récepteur du calculateur respectif.

10. Procédé selon l'une quelconque des revendications précédentes,
**caractérisé en ce que** le procédé est exécuté dans un système de sécurité de technique ferroviaire.
